(19) Europäisches Patentamt / European Patent Office / Office européen des brevets

(11) **EP 3 650 687 B1**

(12) **FASCICULE DE BREVET EUROPEEN**

(45) Date de publication et mention
de la délivrance du brevet:
**16.06.2021 Bulletin 2021/24**

(51) Int Cl.:
**F03D 17/00** [(2016.01)]

(21) Numéro de dépôt: **19203312.4**

(22) Date de dépôt: **15.10.2019**

(54) **PROCEDE DE DETERMINATION D'UN FACTEUR D'INDUCTION POUR UNE EOLIENNE EQUIPEE D'UN CAPTEUR DE TELEDETECTION PAR LASER**

BESTIMMUNGSVERFAHREN EINES INDUKTIONSFAKTORS FÜR EINE WINDKRAFTANLAGE, DIE MIT EINEM LASERFERNERKENNUNGSSENSOR AUSGESTATTET IST

METHOD FOR DETERMINING AN INDUCTION FACTOR FOR A WIND TURBINE PROVIDED WITH A LASER REMOTE DETECTION SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2018 FR 1871455**

(43) Date de publication de la demande:
**13.05.2020 Bulletin 2020/20**

(73) Titulaire: **IFP Energies nouvelles**
**92852 Rueil-Malmaison Cedex (FR)**

(72) Inventeurs:
• **NGUYEN, Hoai-Nam**
  **92852 RUEIL-MALMAISON CEDEX (FR)**
• **GUILLEMIN, Fabrice**
  **92852 RUEIL-MALMAISON CEDEX (FR)**

(56) Documents cités:
**US-A1- 2013 094 961**

• **ERIC SIMLEY ET AL: "Characterization of wind velocities in the upstream induction zone of a wind turbine using scanning continuous-wave lidars", JOURNAL OF RENEWABLE AND SUSTAINABLE ENERGY, vol. 8, no. 1, 1 janvier 2016 (2016-01-01) , page 013301, XP055611027, DOI: 10.1063/1.4940025**

**EP 3 650 687 B1**

**Description**

**Domaine technique**

La présente invention concerne le domaine des énergies renouvelables et concerne plus particulièrement la mesure de la ressource des éoliennes, le vent, dans des objectifs de contrôle (orientation, régulation de couple et de vitesse) et/ou de diagnostic et/ou de surveillance de l'éolienne.

Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine. La nacelle peut tourner pour orienter la machine dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels que des pales à angle variable ou des freins aérodynamiques;

- une transmission, composée de deux axes (arbre mécanique du rotor et arbre mécanique de la machine électrique) reliés par une transmission (boite de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale pour une vitesse du vent d'environ 15 m/s. Il n'est pas nécessaire de concevoir des éoliennes qui maximalisent leur rendement à des vitesses de vent plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

**Technique antérieure**

Pour optimiser le contrôle, il est important de connaître la vitesse du vent au niveau du rotor de l'éolienne. Pour cela, différentes techniques ont été mises au point.

Selon une première technique, l'utilisation d'un anémomètre permet d'estimer une vitesse du vent en un point, mais cette technologie imprécise ne permet pas de mesurer l'ensemble d'un champ de vent ou de connaître les composantes tridimensionnelles de la vitesse du vent.

Selon une deuxième technique, on peut utiliser un capteur LIDAR (acronyme de l'expression en langue anglaise « light détection and ranging » pouvant être traduite par télédétection par Laser). Le LIDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LIDAR utilise de la lumière visible ou infrarouge au lieu d'ondes radio. La distance à un objet ou à une surface est donnée par la mesure du délai entre l'impulsion et la détection du signal réfléchi.

Dans le domaine des éoliennes, le capteur LIDAR est annoncé comme étant un capteur indispensable au bon fonctionnement des grandes éoliennes, tout particulièrement alors que leur taille et leur puissance augmente (aujourd'hui, 5 MW, bientôt 12 MW en offshore). Ce capteur permet la mesure à distance du vent, permettant dans un premier temps de calibrer les éoliennes pour qu'elle puissent fournir une puissance maximum (optimisation de la courbe de puissance). Pour cette étape de calibration, le capteur peut être positionné au sol et orienté verticalement (profiler), ce qui permet de mesurer la vitesse de vent et sa direction, ainsi que le gradient de vent selon les altitudes. Cette application est tout particulièrement critique puisqu'elle permet de connaitre la ressource productrice d'énergie. Ceci est important pour les projets éoliens, puisque cela conditionne la fiabilité financière du projet.

Une seconde application est le placement de ce capteur sur la nacelle de l'éolienne, pour mesurer le champ de vent en avant de l'éolienne en étant orienté quasiment horizontalement. A priori, la mesure du champ de vent à l'avant de l'éolienne permet de connaitre à l'avance la turbulence que va rencontrer l'éolienne quelques instants plus tard. Toutefois, les techniques actuelles de contrôle et de surveillance d'une éolienne ne permettent pas de prendre en compte une mesure réalisée par un capteur LIDAR en estimant précisément la vitesse du vent au niveau du rotor, c'est-à-dire dans le plan du rotor. Une telle application est décrite notamment dans la demande de brevet FR 3013777 (US 2015145253).

En outre, au cours de la dernière décennie, le comportement du vent formé en amont d'une éolienne, c'est-à-dire, la zone d'induction, a suscité un intérêt croissant. Au sein de la zone d'induction, le vent est freiné en raison de la présence et du fonctionnement de l'éolienne, qui prélève une partie de la puissance aérodynamique du vent. Une meilleure compréhension de la zone d'induction permet d'améliorer les stratégies de contrôle basées sur un capteur LIDAR et les évaluations de la puissance des éoliennes. Dans le premier cas, l'objectif est d'utiliser des mesures de vent en amont pour prédire la vitesse du vent sur le plan du rotor. Dans ce dernier cas, c'est pour établir le lien entre la puissance et la vitesse du courant libre, à savoir la vitesse du vent qu'il y aurait eu en un point correspondant à la position de la turbine (éolienne) en l'absence de l'éolienne. Pour ce travail, l'intérêt de la zone d'induction réside dans l'utilisation de mesures à proximité de la turbine pour estimer la vitesse effective du vent du rotor.

Dans le document « Emmanuel Simon Pierre Branlard and Alexander Raul Meyer Forsting. 'Using a cylindrical vortex model to assess the induction zone infront of aligned and yawed rotors'. In: EWEA Offshore 2015 Conference. European Wind Energy Association (EWEA). 2015 », des formules analytiques pour le champ de vitesse induites par un modèle de sillage tourbillonnaire cylindrique sont appliquées pour évaluer la zone d'induction. Les résultats sont comparés à des simulations de disque d'actionneur pour différentes conditions de fonctionnement.

Dans le document « D Medici, Stefan Ivanell, J-À Dahlberg, and P Henrik Alfredsson. 'The upstream flow of a wind turbine: blockage effect'. In: Wind Energy 14.5 (2011), pp. 691-697 », les mesures en soufflerie sont utilisées pour étudier la zone d'induction de différentes éoliennes. De plus, les résultats ont été comparés à une expression analytique de la zone d'induction obtenue à partir d'un modèle de cylindre à vortex linéaire.

Dans le document « Eric Simley, Nikolas Angelou, Torben Mikkelsen, Mikael Sjöholm, Jakob Mann, and Lucy Y Pao. 'Characterization of wind velocities in the upstream induction zone of a wind turbine using scanning continuous-wave lidars'. In: Journal of Renewable and Sustainable Energy 8.1 (2016), p. 013301 », la zone d'induction d'une éolienne est étudiée à l'aide de capteur LIDAR à ondes continues synchronisées. Il a été montré que l'écart type de la composante de vitesse longitudinale est relativement inchangé lorsque le vent se rapproche du rotor, alors que l'écart type de la composante verticale et latérale augmente légèrement.

Dans le document « Niels Troldborg and Alexander Raul Meyer Forsting. 'A simple model of the wind turbine induction zone derived from numerical simulations'. In: Wind Energy 20.12 (2017), pp. 2011- 2020 », la zone d'induction devant différentes éoliennes est étudiée en combinant des simulations de Navier Stokes à l'état stationnaire et une approche par disque d'actionneur. Il a été montré que, pour des distances au-delà d'une fois le rayon du rotor en amont du rotor, la vitesse induite est similaire et indépendante de la géométrie du rotor.

Pour toutes les approches de la littérature, il convient de souligner que la zone d'induction est calculée/estimée hors ligne à l'aide de simulations ou de données expérimentales. De plus, la zone d'induction est supposée implicitement constante pour une vitesse de vent donnée, une fois identifiée. Apparemment, cette zone d'induction donne une information très moyenne sur le déficit de vitesse du vent, car il est clair que la zone d'induction est fonction des angles de pales et de lacet pour une vitesse de vent donnée. C'est pourquoi, ces méthodes ne permettent pas de déterminer en ligne et en continu des phénomènes physiques mis en œuvre dans la zone d'induction.

## Résumé de l'invention

Pour pallier ces inconvénients, la présente invention concerne un procédé de détermination d'un facteur d'induction du vent pour une éolienne équipée d'un capteur LIDAR. Pour ce procédé, on réalise des mesures de la vitesse du vent en plusieurs plans de mesure au moyen du capteur LIDAR, puis on détermine des facteurs d'induction entre les plans de mesure au moyen des mesures et d'un filtre de Kalman linéaire, et on en déduit, au moyen d'un deuxième filtre de Kalman linéaire le facteur d'induction entre un plan de mesure et le plan du rotor de l'éolienne. Ainsi, grâce au capteur LIDAR et aux filtres de Kalman, l'invention permet une mise à jour simple, efficace, et en continu de la zone d'induction.

L'invention concerne également un procédé de détermination de la vitesse du vent dans le plan du rotor, un procédé de contrôle d'une éolienne, et un procédé de diagnostic d'une éolienne, ces procédés utilisant le facteur d'induction déterminé par le procédé selon l'invention.

La présente invention concerne un procédé de détermination d'un facteur d'induction du vent entre un plan de mesure et le plan de rotor d'une éolienne, ladite éolienne étant équipée d'un capteur LIDAR réalisant une mesure relative à la vitesse du vent en au moins trois plans de mesure distants de ladite éolienne, ledit facteur d'induction du vent représentant un coefficient de freinage du vent entre deux points espacés en amont de ladite éolienne, le freinage résultant du fonctionnement de l'éolienne dans le champ du vent. Pour ce procédé, on met en œuvre les étapes suivantes :

a) on mesure la vitesse du vent en au moins trois plans de mesure distants de ladite éolienne au moyen dudit capteur LIDAR ;

b) on détermine au moins deux facteurs d'induction du vent entre deux desdits plans de mesure au moyen desdites mesures de la vitesse du vent auxdits plans de mesure et d'un filtre de Kalman linéaire ; et

c) on détermine ledit facteur d'induction du vent entre un plan de mesure et ledit plan du rotor de ladite éolienne au moyen desdits facteurs d'induction entre deux plans de mesure déterminés et au moyen d'un filtre de Kalman linéaire.

Selon un mode de réalisation, on détermine lesdits au moins deux facteurs d'induction du vent entre lesdits plans de mesure ayant des espacements connus, de préférence ayant le même espacement, et de préférence l'espacement est égal à la distance entre ledit plan de rotor et le plan de mesure le plus proche dudit plan du rotor.

Conformément à une mise en œuvre, on réalise ladite mesure de la vitesse du vent dans au moins quatre plans de mesure, et on détermine au moins trois facteurs d'induction de vent entre deux plans de mesure.

En outre, l'invention concerne un procédé de détermination de la vitesse du vent dans le plan de rotor d'une éolienne équipée d'un capteur LIDAR. Pour ce procédé, on met en œuvre les étapes suivantes :

a) on détermine un facteur d'induction du vent entre un plan de mesure et le plan de rotor d'une éolienne au moyen du procédé selon l'une des caractéristiques précédentes ; et

b) on détermine ladite vitesse du vent dans le plan du rotor en fonction dudit facteur d'induction du vent entre un plan de mesure et le plan de rotor d'une éolienne et au moyen de la mesure de la vitesse du vent dans le plan de mesure relatif audit facteur d'induction du vent.

Selon un mode de réalisation, la vitesse du vent dans le plan du rotor correspond à la multiplication du facteur d'induction de vent entre un plan de mesure et le plan de rotor d'une éolienne par ladite vitesse du vent dans le plan de mesure relatif audit facteur d'induction du vent.

De plus, l'invention concerne un procédé de contrôle d'une éolienne équipée d'un capteur LIDAR. Pour ce procédé, on met en œuvre les étapes suivantes :

a) on détermine la vitesse du vent dans le plan du rotor de ladite éolienne au moyen du procédé selon l'une des caractéristiques précédentes ;

b) on contrôle ladite éolienne en fonction de ladite vitesse du vent au niveau du plan du rotor.

L'invention concerne également un procédé de diagnostic et/ou surveillance d'une éolienne équipée d'un capteur LIDAR. Pour ce procédé, on met en œuvre les étapes suivantes :

a) on détermine un facteur d'induction du vent entre un plan de mesure et le plan de rotor d'une éolienne au moyen du procédé selon l'une des caractéristiques précédentes ;

b) on détermine la puissance aérodynamique prélevée au vent par ladite éolienne au moyen dudit facteur d'induction déterminé du vent entre un plan de mesure et le plan de rotor d'une éolienne ; et

c) on diagnostique et/ou surveille le fonctionnement de ladite éolienne au moyen de ladite puissance aérodynamique prélevée déterminée.

Selon un aspect, l'invention concerne un produit programme d'ordinateur comprenant des instructions de code agencés pour mettre en œuvre les étapes d'un procédé selon l'une des caractéristiques précédentes, lorsque le programme est exécuté sur une unité de traitement dudit capteur LIDAR.

En outre, l'invention concerne un capteur LIDAR pour éolienne comprenant une unité de traitement mettant en œuvre un procédé selon l'une des caractéristiques précédentes.

De plus, l'invention concerne une éolienne comportant un capteur LIDAR selon l'une des caractéristiques précédentes, ledit capteur LIDAR étant de préférence placé sur la nacelle de ladite éolienne.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre une éolienne équipée d'un capteur LIDAR selon un mode de réalisation de l'invention.

La figure 2 illustre les étapes du procédé de détermination d'un facteur d'induction du vent selon un mode de réalisation de l'invention.

La figure 3 illustre les étapes du procédé de détermination de la vitesse du vent selon un mode de réalisation de l'invention.

La figure 4 illustre les étapes du procédé de contrôle d'une éolienne selon un mode de réalisation de l'invention.

La figure 5 illustre les étapes du procédé de diagnostic d'une éolienne selon un mode de réalisation de l'invention.

La figure 6 illustre l'évolution par rapport au temps de trois facteurs d'induction entre des plans de mesure obtenus au moyen du procédé selon un mode de réalisation de l'invention.

La figure 7 illustre l'évolution du facteur d'induction en fonction de la distance par rapport au plan du rotor pour un temps donné obtenu au moyen du procédé selon un mode de réalisation de l'invention.

La figure 8 illustre l'évolution par rapport au temps du facteur d'induction du vent dans le plan du rotor obtenu au moyen du procédé selon un mode de réalisation de l'invention.

La figure 9 illustre l'évolution du facteur d'induction en fonction d'induction en fonction de la distance par rapport au plan du rotor pour un temps donné obtenu au moyen du procédé selon un mode de réalisation de l'invention.

**Description des modes de réalisation**

L'invention concerne un procédé de mesure de la ressource des éoliennes : le vent, en particulier dans des objectifs de contrôle (orientation, régulation de couple et de vitesse) et/ou de diagnostic et/ou de surveillance de l'éolienne, dans lequel on contrôle et/ou on surveille l'éolienne en fonction d'une détermination d'un facteur d'induction du vent, l'éolienne étant équipée d'un capteur LIDAR pour réaliser cette estimation.
Le facteur d'induction est un coefficient de freinage du vent dans la zone d'induction de l'éolienne. En effet, le vent est freiné dans la zone amont de l'éolienne par la présence de l'éolienne et son fonctionnement : en d'autres termes, la puissance prélevée par l'éolienne au vent, entraîne un freinage du vent en amont de l'éolienne. Ainsi le facteur d'induction est représentatif d'un phénomène physique, et donne une indication relative à la ressource de l'éolienne. Le facteur d'induction se calcule entre deux plans en amont de l'éolienne, par définition, il correspond au rapport des vitesses entre ces plans. En notant a le facteur d'induction, u la vitesse du vent, et d1 et d2 les distances respectives des deux plans considérés par rapport au plan du rotor, le facteur d'induction entre les plans situés aux distances d1 et d2 du plan du rotor peut s'écrire :

$$a_{d1,d2} = \frac{u_{d1}}{u_{d2}}$$

Lorsque un des plans considérés est le plan du rotor, on note d1=0.
Selon l'invention, le capteur LIDAR permet de mesurer la vitesse du vent sur une pluralité (au moins trois) plans de mesure en amont de l'éolienne. Il existe plusieurs types de capteur LIDAR, par exemple les capteurs LIDAR scannés, LIDAR continus ou LIDAR puisés. Dans le cadre de l'invention, on utilise de préférence un LIDAR pulsé. Cependant, les autres technologies de LIDAR peuvent être utilisées tout en restant dans le cadre de l'invention.
Le capteur LIDAR permet une mesure rapide. Par conséquent, l'utilisation d'un tel capteur, permet une détermination rapide en continu du facteur d'induction du vent. Par exemple, le taux d'échantillonnage du capteur LIDAR peut être compris entre 1 et 5Hz, et peut valoir 4 Hz.

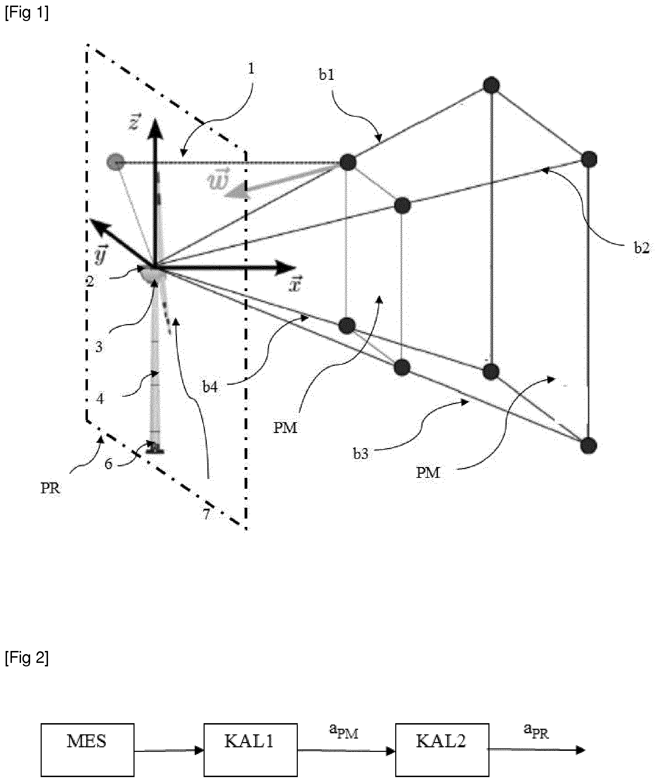

La figure 1 représente, de manière schématique et non limitative, une éolienne 1 à axe horizontal équipée d'un capteur LIDAR 2 pour le procédé selon un mode de réalisation de l'invention. Le capteur LIDAR 2 est utilisé pour mesurer la vitesse du vent à une distance donnée sur une pluralité de plans de mesure PM (seulement deux plans de mesure sont représentés). La connaissance en avance de la mesure de vent permet a priori de donner beaucoup d'informations. Sur cette figure, sont représentés également les axes x, y et z. Le point de référence de ce repère est le centre du rotor. La direction x est la direction longitudinale, correspondant à la direction de l'axe du rotor, en amont de l'éolienne, cette direction correspond aussi à la direction de mesure du capteur LIDAR 2. La direction y, perpendiculaire à la direction x, est la direction latérale située dans un plan horizontal (les directions x, y forment un plan horizontal). La direction z est la direction verticale (correspondant sensiblement à la direction du mât 4) dirigée vers le haut, l'axe z est perpendiculaire aux axes x et y. La plan du rotor est indiqué par le rectangle en traits pointillés PR, il est défini par les directions y, z pour une valeur de x nul. Les plans de mesure PM sont des plans formés par les directions y, z à une distance du plan du rotor PR (pour une valeur de x non nulle). Les plans de mesure PM sont parallèles au plan du rotor PR.

Classiquement, une éolienne 1 permet de transformer l'énergie cinétique du vent en énergie électrique ou mécanique. Pour la conversion du vent en énergie électrique, elle se compose des éléments suivants :

un mât 4 permettant de placer un rotor (non représenté) à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol 6. Le mât 4 abrite généralement une partie des composants électriques et électroniques (modulateur, commande, multiplicateur, générateur, ...) ;

une nacelle 3 montée au sommet du mât 4, abritant des composants mécaniques, pneumatiques, certains composants électriques et électroniques (non représentés), nécessaires au fonctionnement de la machine. La nacelle 3 peut tourner pour orienter la machine dans la bonne direction ;

le rotor, fixé à la nacelle, comprenant plusieurs pales 7 (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) (non représentés) qui convertit l'énergie recueillie en énergie électrique. Le rotor est potentiellement doté de systèmes de contrôle tels que des pales à angle variable ou des freins aérodynamiques ;

une transmission, composée de deux axes (arbre mécanique du rotor et arbre mécanique de la machine électrique) reliés par une transmission (boite de vitesse) (non représentés).

Comme visible à la figure 1, qui est un exemple de réalisation d'un capteur LIDAR pulsé, le capteur LIDAR 2 utilisé comporte quatre faisceaux ou axes de mesures (b1, b2, b3, b4). De manière non limitative, le procédé selon l'invention fonctionne également avec un capteur LIDAR comportant un nombre quelconque de faisceaux. Le capteur LIDAR réalise une mesure ponctuelle en chaque point d'intersection d'un plan de mesure PM et d'un faisceau (b1, b2, b3, b4). Ces points de mesure sont représentés par des cercles noirs sur la figure 1. Le traitement des mesures en ces points de mesure permet de déterminer la vitesse du vent dans les plans de mesure PM. Pour cela, on peut appliquer notamment le procédé de modélisation du vent décrit dans la demande de brevet français ayant le numéro de dépôt FR 17 55675.

De préférence, le capteur LIDAR 2 peut être monté sur la nacelle 3 de l'éolienne 1.

Selon l'invention, le procédé de détermination d'un facteur d'induction du vent entre un plan de mesure et le plan de rotor d'un éolienne comporte les étapes suivantes :

1) Mesure de la vitesse du vent

2) Détermination de facteurs d'induction entre plans de mesure

3) Détermination du facteur d'induction entre un plan de mesure et le plan de rotor

La figure 2 illustre, schématiquement et de manière non limitative les étapes du procédé selon l'invention. La première étape est une étape de mesure (MES) de la vitesse du vent en plusieurs plans de mesure. La deuxième étape utilise les mesures et un filtre de Kalman (KAL1) pour déterminer les facteurs d'induction entre plans de mesure notés $a_{PM}$. La troisième étape utilise les facteurs d'induction entre plans de mesure $a_{PM}$ pour déterminer, au moyen d'un filtre de Kalman (KAL2) le facteur d'induction du vent entre un plan de mesure et le plan du rotor noté $a_{PR}$.

1) Mesure de la vitesse du vent

Lors de cette étape, on mesure, en continu, la vitesse du vent en au moins trois plans de mesure distants de l'éolienne au moyen du capteur LIDAR. Ainsi, la vitesse de vent peut être connue en amont de l'éolienne en trois plans de mesures situés à des desdistances différentes de l'éolienne . En d'autres termes la vitesse de vent peut être connue à trois distances du plan du rotor de l'éolienne. Pour cette étape, on considère les trois composantes du vent (longitudinale, latérale et verticale), ainsi que les variations de la vitesse du vent dans le plan de mesure (par exemple la vitesse du vent augmente avec l'altitude).

Selon un mode de réalisation de l'invention, on réalise la mesure de la vitesse du vent en au moins quatre plans de mesure, de manière à augmenter la précision de la connaissance du vent en amont de l'éolienne et par conséquent la précision de l'estimation du facteur d'induction du vent au niveau du plan du rotor.

Conformément à une mise en œuvre de réalisation de l'invention, les plans de mesure peuvent être éloignés d'une distance longitudinale (selon l'axe x de la figure 1) comprise entre 50 et 400 m du plan du rotor. Ainsi, il est possible de déterminer l'évolution de la vitesse du vent sur une longue distance en amont de l'éolienne, ce qui permet également d'augmenter la précision de l'estimation des facteurs d'induction du vent.

Selon un exemple de réalisation non limitatif, le capteur LIDAR peut réaliser des mesures pour dix plans de mesure, notamment ils peuvent être situés respectivement à des distances de 50, 70, 90, 100, 110, 120, 140, 160, 180 et 200 m du plan du rotor.

2) Détermination des facteurs d'induction entre plans de mesure

Lors de cette étape, on détermine, en temps réel, au moins deux facteurs d'induction du vent entre deux plans de mesure. En d'autres termes, on détermine a minima un premier facteur d'induction du vent entre un premier plan de mesure et un deuxième plan de mesure, et un deuxième facteur d'induction du vent entre un troisième plan de mesure et un quatrième plan de mesure (au maximum un des troisième et quatrième plans de mesure correspond à l'un des premier et deuxième plans de mesure). De manière simplifiée, on appelle ces facteurs d'induction, facteurs d'induction entre plans de mesure dans la suite de la description.

Selon l'invention, on détermine les facteurs d'induction entre plans de mesure, au moyen des mesures de la vitesse du vent et au moyen d'un filtre de Kalman, notamment un filtre de Kalman linéaire.

Avantageusement, pour cette étape et pour le mode de réalisation pour lequel on réalise la mesure pour au moins quatre plans de mesure, on peut déterminer au moins trois facteurs d'induction du vent entre plans de mesure. Ainsi, il est possible d'augmenter la précision du phénomène de freinage du vent en amont de l'éolienne et par conséquent la précision de l'estimation du facteur d'induction du vent au niveau du plan du rotor.

Selon un mode de réalisation de l'invention, on peut déterminer un facteur d'induction entre plans de mesure pour le plan de mesure le plus proche du plan du rotor, de manière à avoir une information relative au champ de vent le plus proche possible du plan du rotor.

Conformément à une mise en œuvre de l'invention, on peut déterminer les facteurs d'induction du vent entre plans de mesure, pour des plans de mesure ayant le même espacement. Par exemple, l'espacement peut être de 50 m et on peut déterminer un premier facteur d'induction pour des plans de mesure situés à 70 et 120 m, et un deuxième facteur d'induction pour des plans de mesure situés à 90 et 140 m.

De préférence, l'espacement entre les plans de mesure utilisés pour les facteurs d'induction du vent entre plans de mesure peut être identique à la distance entre le plan du rotor et le plan de mesure le plus proche. Ainsi, le modèle du facteur d'induction est simplifié, ce qui facilite notamment la résolution du filtre de Kalman.

Par exemple, en combinant les variantes décrites ci-dessus, si le premier plan de mesure est à 50 m du plan du rotor, on peut déterminer un premier facteur d'induction pour des plans de mesure situés à 50 et 100 m, un deuxième facteur d'induction pour des plans de mesure situés à 70 et 120 m et un troisième facteur d'induction pour des plans de mesure situés à 90 et 140 m.

Selon un mode de réalisation de l'invention, le filtre de Kalman peut être mis en œuvre au moyen des différentes étapes décrites ci-dessous. Les étapes sont décrites pour un mode de réalisation pour lequel on détermine un premier facteur d'induction $a_{50,100}$ pour des plans de mesure situés à 50 et 100, un deuxième facteur d'induction $a_{70,120}$ pour des plans de mesure situés à 70 et 120 m et un troisième facteur d'induction $a_{90,140}$ pour des plans de mesure situés à 90 et 140 m.

Dans ce qui suit, on montre seulement comment estimer $a_{50,100}$ en temps réel. $a_{70,120}$ et $a_{90,140}$ sont obtenus exactement de la même manière. Puisque $u_{50}$, $u_{100}$ sont disponibles en temps réel, on pourrait utiliser directement l'équation de définition du facteur d'induction pour déterminer $a_{50,100}$. Cependant, cette méthode présente deux inconvénients. D'une part, les informations sur l'écart type des vitesses de vent estimées $u_{50}$, $u_{100}$ ne sont pas utilisées. On ne peut donc pas connaître l'écart type de l'estimation $a_{50,100}$. D'autre part, on pourrait avoir un problème de stabilité de calcul pour les petites vitesses, c'est-à-dire lorsque $u_{100}$ est proche de zéro.

On note $a_{50,100}(k)$ comme facteur d'induction au temps k. Il est clair que la variation $a_{50,100}(k)$-$a_{50,100}(k - 1)$ est relativement faible. Par conséquent, on peut écrire :

$$a_{50,100}(k) = a_{50,100}(k-1) + \eta(k-1)$$

où $\eta(k - 1)$ est utilisé pour décrire la variation de $a_{50,100}(k)$ dans le temps.

On réécrit la première équation de définition du facteur d'induction comme

$$u_{100}(k)a_{50,100}(k) = u_{50}(k)$$

Puisque les estimations $u_{50}(k)$, $u_{100}(k)$ contiennent du bruit, un modèle plus réaliste de l'équation ci-dessus est :

$$(u_{100}(k) + \epsilon_{100}(k))a_{50,100}(k) = u_{50}(k) + \epsilon_{50}(k)$$

où $\epsilon_{50}(k)$, $\epsilon_{100}(k)$ sont les bruits pour $u_{50}(k)$, $u_{100}(k)$, respectivement. On peut alors récrire l'équation précédente comme :

$$u_{100}(k)a_{50,100}(k) = u_{50}(k) + \epsilon_{50}(k) - \epsilon_{100}(k)a_{50,100}(k)$$

En combinant les équations précédentes, on obtient l'équation d'état suivante :

$$\begin{cases} a_{50,100}(k) & = a_{50,100}(k-1) + \eta(k-1), \\ u_{50}(k) & = u_{100}(k)a_{50,100}(k) + \mu(k) \end{cases}$$

$$\mu(k) = \epsilon_{100}(k)a_{50,100}(k) - \epsilon_{50}(k)$$

Une façon d'estimer le vecteur d'état inconnu $a_{50,100}(k)$ pouvant prendre en compte des informations sur $\epsilon(k)$ et $\mu(k)$ consiste à appliquer un algorithme de filtrage de Kalman, appelé filtre de Kalman. En pratique, ce filtre fournit la solution du problème suivant :

$$\min_{a_{50,100}(k)} J(k)$$

avec

$$J(k) = (a_{50,100}(0)-\overline{a}_{50,100}(0))^T P_0^{-1}(a_{50,100}(0)-\overline{a}_{50,100}(0)) + \sum_{j=1}^{k} \left( \eta(j-1)^T Q^{-1}\eta(k-1) + \mu(j)^T R^{-1}\mu(j) \right)$$

ou $P_0$, $Q,R$ sont des matrices de pondération de dimension appropriée, $a_{50,100}(0)$ recouvert d'une barre est la valeur moyenne de l'état initial $a_{50,100}(0)$.

Afin de résoudre le problème d'optimisation, en utilisant l'algorithme de filtrage de Kalman, les hypothèses suivantes sont formulées. Ces hypothèses concernent principalement une interprétation mathématique pour $P_0$, $Q$ et $R$.

- $a_{50,100}(0)$ est un vecteur aléatoire non corrélé aux bruits $\epsilon(k)$ et $u(k)$.
- $a_{50,100}(0)$ a une moyenne connue avec $P0$ comme matrice de covariance, c'est-à-dire

[Math 9]

$$P_0 = E\left[\left(a_{50,100}(0) - \bar{a}_{50,100}(0)\right)\left(a_{50,100}(0) - \bar{a}_{50,100}(0)\right)^T\right]$$

avec $\bar{a}_{50,100}(0)$ la valeur moyenne de l'état initial

- $\varepsilon(k)$ et $\mu(k)$ sont des bruits blancs à moyenne nulle et non corrélés avec des matrices de covariance $Q$ et $R$, respectivement, c'est-à-dire

$$E[\eta(k)\eta(j)^T] = \begin{cases} Q, & \text{if} \quad k = j, \\ 0, & \text{if} \quad k \neq j \end{cases}$$
$$E[\mu(k)\mu(j)^T] = \begin{cases} R, & \text{if} \quad k = j, \\ 0, & \text{if} \quad k \neq j \end{cases}$$
$$E[\eta(k)\mu(j)^T] = 0, \quad \text{for all } k, j$$

On note que cette hypothèse implique également que $Q$ et $R$ sont des matrices symétriques positives semi-définies.

Les notations suivantes sont adoptées,

- $\hat{a}_{50,100}(k|k-1)$ est l'estimation de $a_{50,100}(k)$ donné des mesures de temps $k - 1$.
- $\hat{a}_{50,100}(k|k)$ est l'estimation de $a_{50,100}(k)$ donné des mesures de temps k
- $P(k|k-1)$ est la matrice de covariance de $a_{50,100}(k)$ donné des mesures de temps $k - 1$.
- $P(k|k)$ est la matrice de covariance de $a_{50,100}(k)$ donné des mesures de temps k.

Ensuite, l'algorithme de filtrage de Kalman peut être résumé comme suit,

- Équation de mise à jour du temps,

[Math 11]

$$\begin{cases} \hat{a}_{50,100}(k|k-1) &= \hat{a}_{50,100}(k-1|k-1) \\ P(k|k-1) &= P(k-1|k-1) + Q \end{cases}$$

- Équation de mise à jour des mesures,

$$\begin{cases} K(k) &= P(k|k-1)u_{100}(k)^T \left(P(k|k-1) + u_{100}(k)Ru_{100}(k)^T\right)^{-1} \\ \hat{a}_{50,100}(k|k) &= \hat{a}_{50,100}(k|k-1) + K(k)\left(u_{50}(k) - u_{100}(k)\hat{x}(k|k-1)\right), \\ P(k|k) &= (I - K(k))P(k|k-1) \end{cases}$$

En appliquant ces étapes, on peut détermine le facteur d'induction $a_{50,100}$. On réitérer ces étapes pour déterminer les facteurs d'induction $a_{70,120}$ et $a_{90,140}$.

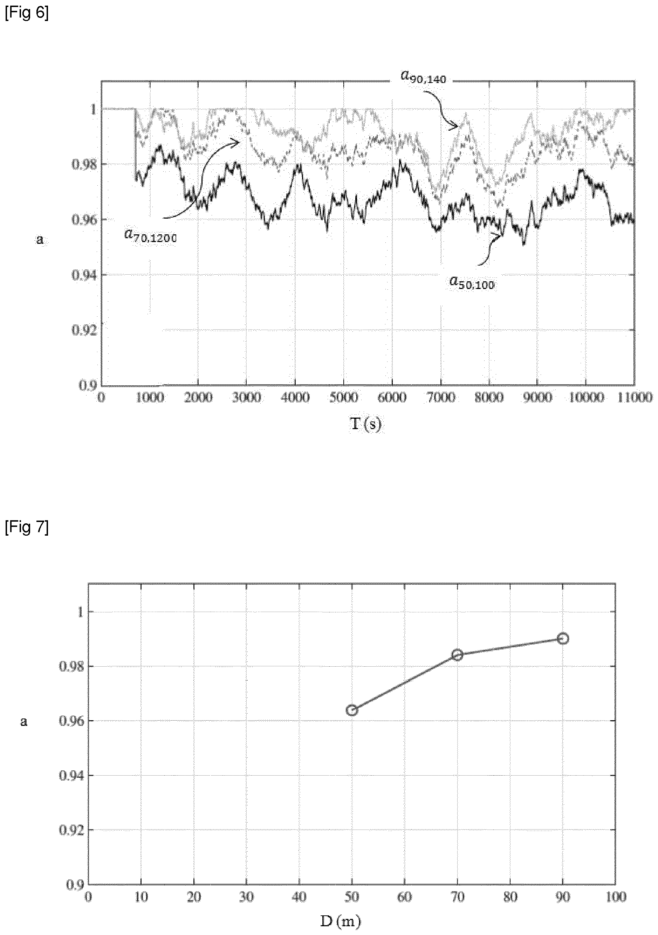

La figure 6 illustre, de manière non limitative, des facteurs d'induction entre plans de mesure $a_{50,100}$ (gris foncé), $a_{70,120}$ (gris moyen pointillé) et $a_{90,140}$ (tiret- gris clair) en fonction du temps T en seconde. Ces facteurs d'induction sont obtenus par le procédé selon l'invention. On observe d'une part le phénomène de freinage du vent : plus on se rapproche de l'éolienne, plus le facteur d'induction entre plans de mesure est faible. On observe d'autre part, que le facteur d'induction est variable dans le temps.

La figure 7 illustre, de manière non limitative, l'évolution du facteur d'induction entre plans de mesure a en fonction de la distance D en mètre du premier plan de mesure pour un temps donné. On observe également le phénomène de freinage du vent, et la non-linéarité du facteur d'induction en fonction de la distance.

3) Détermination du facteur d'induction entre un plan de mesure et le plan du rotor

Lors de cette étape, on détermine, en temps réel, le facteur d'induction du vent entre un des plans de mesures et le plan du rotor. Ainsi, on peut représenter l'évolution du vent au niveau du rotor, en prenant en compte les phénomènes physiques, en particulier le freinage du vent. Selon l'invention, on détermine le facteur d'induction du vent entre un plan de mesure et le plan du rotor au moyens des facteurs d'induction déterminés à l'étape précédente et au moyen d'un filtre de Kalman, notamment un filtre de Kalman linéaire. De manière simplifiée, on appelle ce facteur d'induction, facteur d'induction dans le plan du rotor dans la suite de la description.

De préférence, on peut déterminer le facteur d'induction du vent entre le plan de mesure le plus proche du rotor et le plan du rotor.

Par exemple, lors de cette étape, on peut déterminer le facteur d'induction entre un plan de mesure situé à 50 m du rotor et le plan du rotor.

Selon un mode de réalisation de l'invention, le filtre de Kalman peut être mis en œuvre au moyen des différentes étapes décrites ci-dessous. Les étapes sont décrites pour un mode de réalisation pour lequel on a déterminé $a_{50,100}$, $a_{70,120}$ et $a_{90,140}$ et pour lequel on détermine $a_{0,50}$, c'est-à-dire le facteur d'induction entre un plan de mesure situé à 50 m et le plan du rotor.

En utilisant $a_{50,100}$, $a_{70,120}$ et $a_{90,140}$, l'idée principale d'estimer $a_{0,50}$ est de supposer que $a_{0,50}$, $a_{50,100}$, $a_{70,120}$ et $a_{90,140}$ sont fonction de la distance. Dans ce but, la relation suivante est supposée

$$\begin{cases} a_{0,50} & = 0x_1 + x_2, \\ a_{50,100} & = 50x_1 + x_2, \\ a_{70,120} & = 70x_1 + x_2, \\ a_{90,140} & = 90x_1 + x_2 \end{cases}$$

où x1, x2 sont des paramètres inconnus, qui doivent être déterminés. Comme $a_{50,100}$, $a_{70,120}$ et $a_{90,140}$ changent lentement au fil du temps, il en va de même pour x1 et x2. Par conséquent, on peut écrire

$$\begin{cases} x_1(k) & = x_1(k-1) + \zeta_1(k-1), \\ x_2(k) & = x_2(k-1) + \zeta_2(k-1) \end{cases}$$

où $\zeta_1(k)$, $\zeta_2(k)$ sont utilisés pour caractériser la variation de x1 (k), x2(k). On note

$$x(k) = \begin{bmatrix} x_1(k) \\ x_2(k) \end{bmatrix}, \ \zeta(k) = \begin{bmatrix} \zeta_1(k) \\ \zeta_2(k) \end{bmatrix}$$

On peut alors écrire sous forme compacte :

$$x(k) = x(k-1) + \zeta(k-1)$$

Un modèle plus réaliste qui prend en compte les bruits est le suivant :

$$\begin{cases} a_{50,100}(k) & = [50 \ 1]\, x(k) + \epsilon_1(k), \\ a_{70,120}(k) & = [70 \ 1]\, x(k) + \epsilon_2(k), \\ a_{90,140}(k) & = [90 \ 1]\, x(k) + \epsilon_3(k), \end{cases}$$

où $\epsilon_1$, $\epsilon_2$, $\epsilon_3$ sont les bruits des estimations $a_{50,100}(k)$, $a_{70,120}(k)$ et $a_{90,140}(k)$. On peut alors noter :

$$y(k) = \begin{bmatrix} a_{50,100}(k) \\ a_{70,120}(k) \\ a_{90,140}(k) \end{bmatrix}, \; C = \begin{bmatrix} 50 & 1 \\ 70 & 1 \\ 90 & 1 \end{bmatrix}, \; \epsilon(k) = \begin{bmatrix} \epsilon_1(k) \\ \epsilon_2(k) \\ \epsilon_3(k) \end{bmatrix}$$

On peut alors écrire sous une forme compacte

$$y(k) = Cx(k) + \epsilon(k)$$

En combiner les précédentes équations, on obtient l'équation d'état suivante

$$\begin{cases} x(k) = x(k-1) + \zeta(k-1) \\ y(k) = Cx(k) + \epsilon(k) \end{cases}$$

Comme pour $a_{50,100}(k)$, $a_{70,120}(k)$, $a_{90,140}(k)$, une façon d'obtenir $x(k)$ qui prend en compte les bruits $\zeta(k)$, $\epsilon(k)$ utilise la technique du filtre linéaire de Kalman. Pour cela, on applique les mêmes étapes que celles décrites pour l'étape précédente.

Une fois que $x(k)$ est estimé, le facteur d'induction $a_{0,50}$ peut être calculé comme suit:

$$a_{0,50}(k) = [0 \; 1]x(k).$$

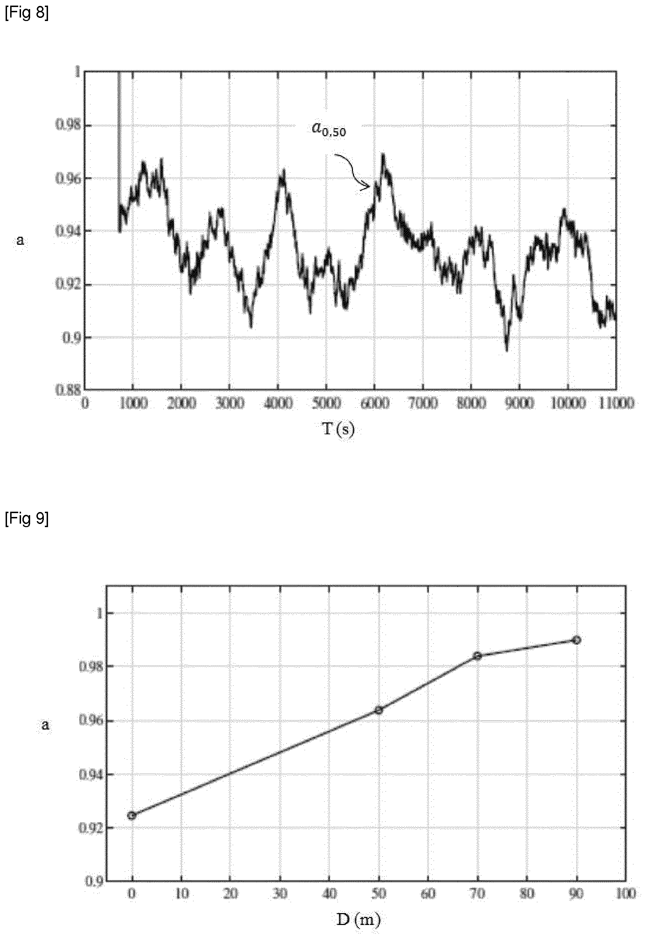

La figure 8 illustre, de manière non limitative, le facteur d'induction au plan du rotor $a_{0,50}$ en fonction du temps T en seconde. Ce facteur d'induction est obtenu par le procédé selon l'invention à partir des facteurs d'induction de la figure 6. On observe d'une part le phénomène de freinage du vent (induction) : le facteur d'induction au niveau du rotor (figure 8) est inférieur aux facteurs d'induction entre plans de mesure (figure 6). On observe d'autre part, que le facteur d'induction est variable dans le temps. En outre, les évolutions d'un facteur d'induction à un autre facteur d'induction sont différentes.

La figure 9 est une courbe similaire à la figure 7, dans laquelle on représente, de manière non limitative, l'évolution du facteur d'induction a en fonction de la distance D en mètre du premier plan de mesure pour un temps donné. On observe également le phénomène de freinage du vent, et la non linéarité du facteur d'induction en fonction de la distance.

Ainsi, le procédé selon l'invention permet de déterminer le facteur d'induction du vent entre un plan de mesure et la plan du rotor, en temps réel.

**Applications**

De plus, l'invention concerne un procédé de détermination de la vitesse du vent dans le plan du rotor d'une éolienne équipée d'un capteur LIDAR. Pour ce procédé, on met en œuvre les étapes suivantes :

- on détermine un facteur d'induction du vent entre un plan de mesure et le plan du rotor de l'éolienne au moyen du procédé selon l'une quelconque des combinaisons de variantes décrites précédemment,

- on détermine la vitesse du vent dans le plan du rotor de l'éolienne en fonction du facteur d'induction de vent déterminé à l'étape précédente, et au moyen d'au moins une mesure de vitesse du vent utilisé à l'étape précédente, la mesure du vitesse du vent correspond à la vitesse du vent dans le plan de mesure relatif au plan de mesure utilisé pour le facteur d'induction.

En d'autres termes, si on détermine à la première étape le facteur d'induction entre un plan de mesure situé à la distance d2 du plan du rotor, lors de l'étape de détermination de la vitesse du vent dans le plan du rotor, on utilise la mesure de la vitesse du vent dans le plan de mesure situé à la distance d2 du plan du rotor.

Le procédé selon l'invention permet de déterminer en ligne la vitesse du vent dans le plan du rotor, de manière simple et précise (car prenant en compte les phénomènes physiques dans la zone d'induction).

Selon un mode de réalisation, on peut déterminer la vitesse du vent dans le plan du rotor, par multiplication (produit) du facteur d'induction du vent et de la vitesse du vent relative. On peut alors utiliser l'équation de la définition du facteur d'induction. En effet, cette équation peut s'écrire :

$$u_0 = u_{d2} \times a_{0,d2}$$

La vitesse $u_{d2}$ étant mesurée et le facteur d'induction $a_{0,d2}$ étant déterminé par le procédé de détermination du facteur d'induction.

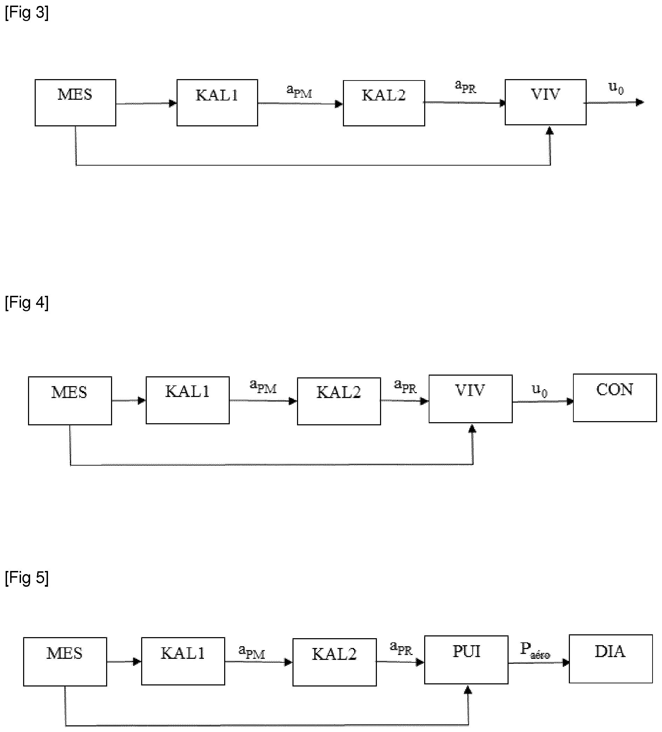

La figure 3 illustre, schématiquement et de manière non limitative, les étapes du procédé de détermination de la vitesse du vent dans le plan du rotor. Les premières étapes sont identiques aux étapes de la figure 2. La première étape est une étape de mesure (MES) de la vitesse du vent en plusieurs plans de mesure. La deuxième étape utilise les mesures et un filtre de Kalman (KAL1) pour déterminer les facteurs d'induction entre plans de mesure notés $a_{PM}$. La troisième étape utilise les facteurs d'induction entre plans de mesure $a_{PM}$ pour déterminer, au moyen d'un filtre de Kalman (KAL2) le facteur d'induction du vent entre un plan de mesure et le plan du rotor noté $a_{PR}$. La quatrième étape (VIV) détermine la vitesse du vent dans le plan du rotor $u_0$ à partir du facteur d'induction entre un plan de mesure et le plan du rotor $a_{PR}$ et une mesure de la vitesse du vent dans le plan de mesure considéré.

La présente invention concerne également un procédé de contrôle d'une éolienne équipée d'un capteur LIDAR. Pour ce procédé, on met en œuvre les étapes suivantes :

- on détermine la vitesse du vent dans le plan du rotor au moyen du procédé de détermination de la vitesse du vent selon l'une quelconque des variantes décrites ci-dessus ;
- on contrôle l'éolienne en fonction de la vitesse du vent au niveau du plan du rotor.

La connaissance précise et en temps réel de la vitesse du vent dans le plan du rotor permet un contrôle adapté de l'éolienne, en termes de minimisation des effets sur la structure de l'éolienne et de maximisation de la puissance récupérée. En effet, au moyen de ce contrôle, le LIDAR permet de réduire les charges sur la structure, dont les pales et le mât représentent 54% du coût. Par conséquent, l'utilisation d'un capteur LIDAR permet d'optimiser la structure de l'éolienne, et donc de diminuer les coûts et la maintenance.

Conformément à une mise en œuvre de l'invention, on peut commander l'angle d'inclinaison des pales et/ou le couple électrique de récupération du générateur de l'éolienne en fonction de la vitesse du vent. D'autres types de dispositif de régulation peuvent être utilisés.

Selon un mode de réalisation de l'invention, l'angle d'inclinaison des pales et/ou le couple électrique de récupération sont déterminés au moyen de cartographies de l'éolienne en fonction de la vitesse du vent au niveau du rotor. Par exemple, on peut appliquer le procédé de contrôle décrit dans la demande de brevet FR 2976630 A1 (US 2012-0321463).

La figure 4 illustre, schématiquement et de manière non limitative, les étapes du procédé de détermination de contrôle d'une éolienne. Les premières étapes sont identiques aux étapes de la figure 3. La première étape est une étape de mesure (MES) de la vitesse du vent en plusieurs plans de mesure. La deuxième étape utilise les mesures et un filtre de Kalman (KAL1) pour déterminer les facteurs d'induction entre plans de mesure notés $a_{PM}$. La troisième étape utilise les facteurs d'induction entre plans de mesure $a_{PM}$ pour déterminer, au moyen d'un filtre de Kalman (KAL2) le facteur d'induction du vent entre un plan de mesure et le plan du rotor noté $a_{PR}$. La quatrième étape (VIV) détermine la vitesse du vent dans le plan du rotor $u_0$ à partir du facteur d'induction entre un plan de mesure et le plan du rotor $a_{PR}$ et une mesure de la vitesse du vent dans le plan de mesure considéré. La cinquième étape (CON) concerne le contrôle de l'éolienne en fonction de la vitesse du vent $u_0$ dans le plan du rotor.

En outre, l'invention concerne un procédé de diagnostic et/ou de surveillance d'une éolienne équipée d'un capteur LIDAR, dans lequel on met en œuvre les étapes suivantes :

- on détermine un facteur d'induction du vent entre un plan de mesure et le plan du rotor de l'éolienne au moyen du procédé de détermination du facteur d'induction selon l'une quelconque des combinaisons de variantes décrites précédemment,

- on détermine la puissance aérodynamique prélevée au vent par l'éolienne au moyen du facteur d'induction déterminé à l'étape précédente, et

- on diagnostique et/ou surveille le fonctionnement de l'éolienne en fonction de la puissance aérodynamique déterminée à l'étape précédente.

Le facteur d'induction traduisant le freinage du vent dû à la présence de l'éolienne dans le champ de vent, il est possible de déterminer à partir de ce facteur d'induction la puissance aérodynamique prélevée au vent par l'éolienne. Selon un mode de réalisation, on peut déterminer cette puissance aérodynamique $P_{aéro}$ prélevée au moyen du facteur d'induction a, de la vitesse du vent libre $V_{inf}$ de la densité de l'air Ro, de la surface de l'éolienne $A_d$,

$$P_{aéro} = 2RoA_d V_{inf}^3 a(1-a)^2$$

La puissance aérodynamique prélevée donne des informations sur le fonctionnement de l'éolienne, c'est ce qui permet de réaliser un diagnostic et/ou une surveillance du fonctionnement de l'éolienne. L'idée de principale est de comparer la puissance électrique produite par l'éolienne à la puissance électrique théorique donnée par l'équation précédente.

En utilisant le rapport entre les deux puissances, on peut de réaliser un diagnostic et/ou une surveillance du fonctionnement et du rendement aérodynamique effectif de l'éolienne.

Disposer d'une mise à jour en temps réel du facteur d'induction permet également de quantifier les charges aérodynamiques en poussée appliquées sur l'éolienne, et d'en déduire un estimation des dommages cumulés en fatigue. Selon une mise en œuvre de l'invention, ceci peut être réalisé grâce à la relation qui lie le coefficient de poussée $C_T$ au facteur d'induction (Burton, Wind Energy handbook, ch.3.2), qui peut s'écrire $C_T=4a(1-a)$.

En outre, l'estimation en ligne du facteur d'induction peut permettre d'élaborer et mettre à jour en temps réel des modèles simplifiés de sillage d'éolienne. Ceci permet d'élaborer des diagnostics de fonctionnement à l'échelle d'un ferme éolienne, et d'identifier les zones à risques où des éoliennes se trouvent dans le sillage d'autres éoliennes.

La figure 5 illustre, schématiquement et de manière non limitative, les étapes du procédé de détermination de la vitesse du vent dans le plan du rotor. Les premières étapes sont identiques aux étapes de la figure 2. La première étape est une étape de mesure (MES) de la vitesse du vent en plusieurs plans de mesure. La deuxième étape utilise les mesures et un filtre de Kalman (KAL1) pour déterminer les facteurs d'induction entre plans de mesure notés $a_{PM}$. La troisième étape utilise les facteurs d'induction entre plans de mesure $a_{PM}$ pour déterminer, au moyen d'un filtre de Kalman (KAL2) le facteur d'induction du vent entre un plan de mesure et le plan du rotor noté $a_{PR}$. La quatrième étape (PUI) détermine la puissance aérodynamique prélevée au vent $P_{aéro}$ à partir du facteur d'induction entre un plan de mesure et le plan du rotor $a_{PR}$ et une mesure de la vitesse du vent dans le plan de mesure. La cinquième étape (DIA) réalise le diagnostic ou la surveillance de l'éolienne en fonction de la puissance aérodynamique prélevée $P_{aéro}$.

De plus, l'invention concerne un produit programme d'ordinateur, qui comprend des instructions de code agencés pour mettre en œuvre les étapes d'un des procédés précédemment décrits (procédé de détermination d'un facteur d'induction, procédé de détermination de la vitesse dans le plan du rotor, procédé de contrôle, procédé de diagnostic et/ou de surveillance). Le programme est exécuté sur une unité de traitement du capteur LIDAR, ou sur tout moyen analogue, lié au capteur LIDAR ou à l'éolienne.

Selon un aspect, la présente invention concerne également un capteur LIDAR pour éolienne, qui comprend une unité de traitement configurée pour mettre en œuvre un des procédés précédemment décrits (procédé de détermination d'un facteur d'induction, procédé de détermination de la vitesse dans le plan du rotor, procédé de contrôle, procédé de diagnostic et/ou de surveillance).

Conformément à une mise en œuvre de l'invention, le capteur LIDAR peut être un capteur LIDAR scanné, LIDAR continu ou LIDAR pulsé. De préférence, le capteur LIDAR est un capteur LIDAR pulsé.

L'invention concerne également une éolienne, notamment une éolienne offshore (en mer) ou onshore (sur terre) équipée d'un capteur LIDAR tel que décrit ci-dessus. Selon un mode de réalisation de l'invention, le capteur LIDAR peut être disposé sur la nacelle de l'éolienne. Le capteur LIDAR est dirigé de telle sorte à réaliser une mesure du vent en amont de l'éolienne (c'est-à-dire avant l'éolienne et selon son axe longitudinal, désigné par l'axe x sur la figure 1). Selon un mode de réalisation, l'éolienne peut être conforme à l'éolienne illustrée en figure 1.

Pour le mode de réalisation du procédé de contrôle, l'éolienne peut comprendre des moyens de contrôle, par exemple le contrôle de l'angle de pitch (pouvant être traduit par angle de tangage) d'une pale de l'éolienne ou le couple électrique, pour mettre en œuvre le procédé selon l'invention.

Pour le mode de réalisation du procédé de diagnostic et/ou de surveillance, l'éolienne peut comprendre des moyens de diagnostic et/ou de surveillance du fonctionnement de l'éolienne.

**Revendications**

1. Procédé de détermination d'un facteur d'induction du vent entre un plan de mesure (PM) et le plan de rotor (PR) d'une éolienne (1), ladite éolienne (1) étant équipée d'un capteur LIDAR (2) réalisant une mesure relative à la vitesse du vent en au moins trois plans de mesure (PM) distants de ladite éolienne (1), ledit facteur d'induction du vent représentant un coefficient de freinage du vent entre deux points espacés en amont de ladite éolienne (1), le freinage résultant du fonctionnement de l'éolienne (1) dans le champ du vent, **caractérisé en ce qu'**on met en œuvre les étapes suivantes :

a) on mesure la vitesse du vent en au moins trois plans de mesure (PM) distants de ladite éolienne au moyen dudit capteur LIDAR (2) ;

b) on détermine au moins deux facteurs d'induction du vent entre deux desdits plans de mesure (PM) au moyen desdites mesures de la vitesse du vent auxdits plans de mesure et d'un filtre de Kalman linéaire ; et

c) on détermine ledit facteur d'induction du vent entre un plan de mesure (PM) et ledit plan du rotor (PR) de ladite éolienne (1) au moyen desdits facteurs d'induction entre deux plans de mesure (PM) déterminés et au moyen d'un filtre de Kalman linéaire.

2. Procédé selon la revendication 1, dans lequel on détermine lesdits au moins deux facteurs d'induction du vent entre lesdits plans de mesure (PM) ayant des espacements connus, de préférence ayant le même espacement, et de préférence l'espacement est égal à la distance entre ledit plan de rotor (PR) et le plan de mesure (PM) le plus proche dudit plan du rotor (PR).

3. Procédé selon l'une des revendications précédentes, dans lequel on réalise ladite mesure de la vitesse du vent dans au moins quatre plans de mesure (PM), et on détermine au moins trois facteurs d'induction de vent entre deux plans de mesure (PM).

4. Procédé de détermination de la vitesse du vent dans le plan de rotor d'une éolienne (1) équipée d'un capteur LIDAR (2), **caractérisé en ce qu'**on met en œuvre les étapes suivantes :

a) on détermine un facteur d'induction du vent entre un plan de mesure (PM) et le plan de rotor (PR) d'une éolienne au moyen du procédé selon l'une des revendications 1 à 3 ; et

b) on détermine ladite vitesse du vent dans le plan du rotor (PR) en fonction dudit facteur d'induction du vent entre un plan de mesure (PM) et le plan de rotor (PR) d'une éolienne (1) et au moyen de la mesure de la vitesse du vent dans le plan de mesure (PM) relatif audit facteur d'induction du vent.

5. Procédé selon la revendication 4, dans lequel la vitesse du vent dans le plan du rotor (PR) correspond à la multiplication du facteur d'induction de vent entre un plan de mesure (PM) et le plan de rotor (PR) d'une éolienne (1) par ladite vitesse du vent dans le plan de mesure (PM) relatif audit facteur d'induction du vent.

6. Procédé de contrôle d'une éolienne (1) équipée d'un capteur LIDAR (2), **caractérisé en ce qu'**on met en œuvre les étapes suivantes :

a) on détermine la vitesse du vent dans le plan du rotor (PR) de ladite éolienne (1) au moyen du procédé selon l'une des revendications 4 ou 5 ;

b) on contrôle ladite éolienne (1) en fonction de ladite vitesse du vent au niveau du plan du rotor (PR).

7. Procédé de diagnostic et/ou surveillance d'une éolienne équipée d'un capteur LIDAR, **caractérisé en ce qu'**on met en œuvre les étapes suivantes :

a) on détermine un facteur d'induction du vent entre un plan de mesure (PM) et le plan de rotor (PR) d'une éolienne (1) au moyen du procédé selon l'une des revendications 1 à 3 ;

b) on détermine la puissance aérodynamique prélevée au vent par ladite éolienne (1) au moyen dudit facteur d'induction déterminé du vent entre un plan de mesure (PM) et le plan de rotor (PR) d'une éolienne (1); et

c) on diagnostique et/ou surveille le fonctionnement de ladite éolienne (1) au moyen de ladite puissance aérodynamique prélevée déterminée.

8. Produit programme d'ordinateur **caractérisé en ce qu'**il comprend des instructions de code agencés pour mettre en œuvre les étapes d'un procédé selon l'une des revendications précédentes, lorsque le programme est exécuté sur une unité de traitement dudit capteur LIDAR (2).

9. Capteur LIDAR (2) pour éolienne **caractérisé en ce qu'**il comprend une unité de traitement mettant en œuvre un procédé selon l'une des revendications 1 à 7.

10. Eolienne (1) **caractérisée en ce qu'**elle comporte un capteur LIDAR (2) selon la revendication 9, ledit capteur LIDAR (2) étant de préférence placé sur la nacelle de ladite éolienne (1).


**Patentansprüche**

1. Verfahren zur Bestimmung eines Induktionsfaktors des Windes zwischen einer Messebene (PM) und der Rotorebene (PR) einer Windkraftanlage (1), wobei die Windkraftanlage (1) mit einem LIDAR-Sensor (2) ausgerüstet ist, der eine Messung der Windgeschwindigkeit in mindestens drei von der Windkraftanlage (1) entfernten Messebenen (PM) vornimmt, wobei der Induktionsfaktor des Windes einen Bremskoeffizienten des Windes zwischen zwei beabstandeten Punkten stromaufwärts der Windkraftanlage (1) darstellt, wobei das Bremsen aus dem Betrieb der Windkraftanlage (1) in dem Windfeld resultiert, **dadurch gekennzeichnet, dass** die folgenden Schritte umgesetzt werden:

   a) Messen der Windgeschwindigkeit in mindestens drei von der Windkraftanlage entfernten Messebenen (PM) mit Hilfe eines LIDAR-Sensors (2);
   b) Bestimmen von mindestens zwei Induktionsfaktoren des Windes zwischen zwei der Messebenen (PM) mit Hilfe der Messungen der Windgeschwindigkeit in den Messebenen und eines linearen Kalman-Filters; und
   c) Bestimmen des Induktionsfaktors des Windes zwischen einer Messebene (PM) und der Rotorebene (PR) der Windkraftanlage (1) mit Hilfe der zwischen zwei Messebenen (PM) bestimmten Induktionsfaktoren und mit Hilfe eines linearen Kalman-Filters.

2. Verfahren nach Anspruch 1, wobei die mindestens zwei Induktionsfaktoren des Windes zwischen denjenigen Messebenen (PM) bestimmt werden, die bekannte Abstände aufweisen und vorzugsweise den gleichen Abstand aufweisen und wobei der Abstand vorzugsweise gleich dem Abstand zwischen der Rotorebene (PR) und der der Rotorebene (PR) am nächsten liegenden Messebene (PM) ist.

3. Verfahren nach einem der vorhergehenden Ansprüche, wobei die Messung der Windgeschwindigkeit in mindestens vier Messebenen (PM) vorgenommen wird und wobei mindestens drei Windinduktionsfaktoren zwischen zwei Messebenen (PM) bestimmt werden.

4. Verfahren zur Bestimmung der Windgeschwindigkeit in der Rotorebene einer Windkraftanlage (1), die mit einem LIDAR-Sensor (2) ausgerüstet ist, **dadurch gekennzeichnet, dass** die folgenden Schritte umgesetzt werden:

   a) Bestimmen eines Induktionsfaktors des Windes zwischen einer Messebene (PM) und der Rotorebene (PR) einer Windkraftanlage mit Hilfe des Verfahrens nach einem der Ansprüche 1 bis 3; und
   b) Bestimmen der Windgeschwindigkeit in der Rotorebene (PR) in Abhängigkeit von dem Induktionsfaktor des Windes zwischen einer Messebene (PM) und der Rotorebene (PR) einer Windkraftanlage (1) und mit Hilfe der Messung der Windgeschwindigkeit in der Messebene (PM) relativ zu dem Induktionsfaktor des Windes.

5. Verfahren nach Anspruch 4, wobei die Windgeschwindigkeit in der Rotorebene (PR) der Multiplikation des Windinduktionsfaktors zwischen einer Messebene (PM) und der Rotorebene (PR) einer Windkraftanlage (1) mit der Windgeschwindigkeit in der Messebene (PM) relativ zu dem Induktionsfaktor des Windes entspricht.

6. Verfahren zur Steuerung einer Windkraftanlage (1), die mit einem LIDAR-Sensor (2) ausgerüstet ist, **dadurch gekennzeichnet, dass** die folgenden Schritte umgesetzt werden:

   a) Bestimmen der Windgeschwindigkeit in der Rotorebene (PR) der Windkraftanlage (1) mit Hilfe des Verfahrens nach einem der Ansprüche 4 oder 5;
   b) Steuern der Windkraftanlage (1) in Abhängigkeit von der Windgeschwindigkeit im Bereich der Rotorebene (PR).

7. Verfahren zur Diagnose und/oder Überwachung einer Windkraftanlage, die mit einem LIDAR-Sensor ausgerüstet ist, **dadurch gekennzeichnet, dass** die folgenden Schritte umgesetzt werden:

   a) Bestimmen eines Induktionsfaktors des Windes zwischen einer Messebene (PM) und der Rotorebene (PR) einer Windkraftanlage (1) mit Hilfe des Verfahrens nach einem der Ansprüche 1 bis 3; und
   b) Bestimmen der aerodynamischen Leistung, die die Windkraftanlage (1) aus dem Wind aufnimmt, mit Hilfe des zwischen einer Messebene (PM) und der Rotorebene (PR) einer Windkraftanlage (1) bestimmten Induktionsfaktors des Windes; und

c) Diagnostizieren und/oder Überwachen des Betriebs der Windkraftanlage (1) mit Hilfe der bestimmten aufgenommenen aerodynamischen Leistung.

8. Computerprogrammprodukt, **dadurch gekennzeichnet, dass** es Codeanweisungen beinhaltet, die eingerichtet sind, um die Schritte eines Verfahrens nach einem der vorhergehenden Schritte umzusetzen, wenn das Programm in einer Verarbeitungseinheit des LIDAR-Sensors (2) ausgeführt wird.

9. LIDAR-Sensor (2) für eine Windkraftanlage, **dadurch gekennzeichnet, dass** er eine Verarbeitungseinheit beinhaltet, die ein Verfahren nach einem der Ansprüche 1 bis 7 umsetzt.

10. Windkraftanlage (1), **dadurch gekennzeichnet, dass** sie einen LIDAR-Sensor (2) nach Anspruch 9 umfasst, wobei der LIDAR-Sensor (2) vorzugsweise an der Gondel der Windkraftanlage (1) angebracht ist.

**Claims**

1. Method for determining a wind induction factor between a measurement plane (PM) and the rotor plane (PR) of a wind turbine (1), said wind turbine (1) being equipped with a lidar sensor (2) that takes a measurement relative to wind speed for at least three measurement planes (PM) distant from said wind turbine (1), said wind induction factor representing a wind braking coefficient between two spaced-apart points upstream of said wind turbine (1), the braking resulting from the operation of the wind turbine (1) in the wind field, **characterized in that** the following steps are implemented:

   a) wind speed is measured for at least three measurement planes (PM) distant from said wind turbine by means of said lidar sensor (2);
   b) at least two wind induction factors between two said measurement planes (PM) are determined by means of said measurements of the wind speed at said measurement planes and of a linear Kalman filter; and
   c) said wind induction factor between a measurement plane (PM) and said plane (PR) of the rotor of said wind turbine (1) is determined by means of said determined induction factors between two measurement planes (PM) and by means of a linear Kalman filter.

2. Method according to Claim 1, wherein said at least two wind induction factors are determined between said measurement planes (PM) having known spacings, and preferably having the same spacing, and preferably the spacing is equal to the distance between said rotor plane (PR) and the measurement plane (PM) closest to said plane (PR) of the rotor.

3. Method according to one of the preceding claims, wherein said wind-speed measurement is taken in at least four measurement planes (PM), and at least three wind induction factors between two measurement planes (PM) are determined.

4. Method for determining wind speed in the rotor plane of a wind turbine (1) equipped with a lidar sensor (2), **characterized in that** the following steps are implemented:

   a) a wind induction factor between a measurement plane (PM) and the rotor plane (PR) of a wind turbine is determined by means of the method according to one of Claims 1 to 3; and
   b) said wind speed in the plane (PR) of the rotor is determined depending on said wind induction factor between a measurement plane (PM) and the rotor plane (PR) of a wind turbine (1) and by means of the measurement of the wind speed in the measurement plane (PM) relative to said wind induction factor.

5. Method according to Claim 4, wherein the wind speed in the plane (PR) of the rotor corresponds to the multiplication of the wind induction factor between a measurement plane (PM) and the rotor plane (PR) of a wind turbine (1) by said wind speed in the measurement plane (PM) relative to said wind induction factor.

6. Method for controlling a wind turbine (1) equipped with a lidar sensor (2), **characterized in that** the following steps are implemented:

   a) the wind speed in the plane (PR) of the rotor of said wind turbine (1) is determined by means of the method according to either of Claims 4 and 5;

b) said wind turbine (1) is controlled depending on said wind speed level with the plane (PR) of the rotor.

7. Method for diagnosing and/or monitoring a wind turbine equipped with a lidar sensor, **characterized in that** the following steps are implemented:

a) a wind induction factor between a measurement plane (PM) and the rotor plane (PR) of a wind turbine (1) is determined by means of the method according to one of Claims 1 to 3;

b) the aerodynamic power drawn from the wind by said wind turbine (1) is determined by means of said determined wind induction factor between a measurement plane (PM) and the rotor plane (PR) of a wind turbine (1); and

c) the operation of said wind turbine (1) is diagnosed and/or monitored by means of said determined drawn aerodynamic power.

8. Computer program product **characterized in that** it comprises code instructions arranged to implement the steps of a method according to one of the preceding claims, when the program is executed on a processing unit of said lidar sensor (2).

9. Wind-turbine lidar sensor (2) **characterized in that** it comprises a processing unit that implements a method according to one of Claims 1 to 7.

10. Wind turbine (1) **characterized in that** it comprises a lidar sensor (2) according to Claim 9, said lidar sensor (2) preferably being placed on the nacelle of said wind turbine (1).

[Fig 1]

[Fig 2]

[Fig 3]

```
┌───────┐        ┌───────┐  a_PM   ┌───────┐  a_PR   ┌───────┐   u_0
│  MES  │───────▶│  KAL1 │────────▶│  KAL2 │────────▶│  VIV  │───────▶
└───┬───┘        └───────┘         └───────┘         └───────┘
    │                                                     ▲
    └─────────────────────────────────────────────────────┘
```

[Fig 4]

```
┌───────┐      ┌───────┐  a_PM  ┌───────┐  a_PR  ┌───────┐  u_0  ┌───────┐
│  MES  │─────▶│  KAL1 │───────▶│  KAL2 │───────▶│  VIV  │──────▶│  CON  │
└───┬───┘      └───────┘        └───────┘        └───────┘       └───────┘
    │                                                ▲
    └────────────────────────────────────────────────┘
```

[Fig 5]

```
┌───────┐      ┌───────┐  a_PM  ┌───────┐  a_PR  ┌───────┐ P_aéro ┌───────┐
│  MES  │─────▶│  KAL1 │───────▶│  KAL2 │───────▶│  PUI  │───────▶│  DIA  │
└───┬───┘      └───────┘        └───────┘        └───────┘        └───────┘
    │                                                ▲
    └────────────────────────────────────────────────┘
```

EP 3 650 687 B1

[Fig 6]

[Fig 7]

[Fig 8]

[Fig 9]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3013777
- US 2015145253 A
- FR 1755675
- FR 2976630 A1
- US 20120321463 A

**Littérature non-brevet citée dans la description**

- Using a cylindrical vortex model to assess the induction zone infront of aligned and yawed rotors. **EMMANUEL SIMON PIERRE BRANLARD ; ALEXANDER RAUL MEYER FORSTING.** EWEA Offshore 2015 Conference. European Wind Energy Association (EWEA), 2015
- **D MEDICI ; STEFAN IVANELL ; J-À DAHLBERG ; P HENRIK ALFREDSSON.** The upstream flow of a wind turbine: blockage effect. *Wind Energy,* 2011, vol. 14.5, 691-697
- **ERIC SIMLEY ; NIKOLAS ANGELOU ; TORBEN MIKKELSEN ; MIKAEL SJÖHOLM ; JAKOB MANN ; LUCY Y PAO.** Characterization of wind velocities in the upstream induction zone of a wind turbine using scanning continuous-wave lidars. *Journal of Renewable and Sustainable Energy,* 2016, vol. 8.1, 013301
- **NIELS TROLDBORG ; ALEXANDER RAUL MEYER FORSTING.** A simple model of the wind turbine induction zone derived from numerical simulations. *Wind Energy,* 2017, vol. 20.12, 2011-2020